# EUROPÄISCHE PATENTSCHRIFT

(11) **EP 1 455 087 B1**
(45) Veröffentlichungstag und Bekanntmachung des Hinweises auf die Patenterteilung: **19.08.2009**
(21) Anmeldenummer: 04003946.3
(22) Anmeldetag: 20.02.2004
(51) Int. Cl.: F03B 13/10

(54) **Verfahren zum Umbau einer Anlage mit Rohrturbinen**
Method of reconstructing a plant with bulb turbines
Méthode de restructuration d'une installation avec des turbines bulbe

(30) Priorität: 06.03.2003 AT 3312003
(43) Veröffentlichungstag der Anmeldung: 08.09.2004
(73) Patentinhaber: VA TECH HYDRO GmbH, 1141 Wien (AT)
(72) Erfinder: Priegl, Peter, 2102 Bisamberg (AT); Kienberger, Volker, 4020 Linz (AT); Rammler, Andreas, 4614 Weisskirchen (AT)
(74) Vertreter: Schweinzer, Friedrich

(56) Entgegenhaltungen:
- EP-A- 1 083 333
- FR-A- 2 571 101
- US-A- 4 165 467
- US-A- 4 755 690
- US-B1- 6 281 597

## Beschreibung

Die Anmeldung betrifft ein Verfahren zum Umbau einer in einem Wasserweg angeordeten Anlage zur Erzeugung elektrischer Energie aus einem strömenden Medium. Eine solche Einrichtung zur Erzeugung elektrischer Energie aus einem strömenden Medium, z.B. Wasser besteht aus einer Anzahl von Turbinen-Generatoreinheiten, die zumindest abschnittsweise übereinander und/oder nebeneinander angeordnet und miteinander zu einem oder mehreren Modulen verbunden sind, sowie zumindest zwei ortfesten Strukturen, die im Wesentlichen nebeneinander angeordnet sind und zwischen denen ein oder mehrere Module heb- und senkbar angeordnet sind, sodass stromaufwärts des Moduls ein Oberwasserspiegel und stromabwärts des Moduls ein Unterwasserspiegel entsteht.

Bei Anlagen zur Erzeugung elektrischer Energie in einem Wasserweg mittels eingesetzter Modulen aus einer Anzahl von Turbinen-Generatoreinheiten, die zumindest abschnittsweise übereinander und/oder nebeneinander angeordnet und miteinander zu einem oder mehreren Modulen verbunden sind, wie z.B. aus der US 6,281,597 B1 bekannt, ist es erforderlich, dass ein Modul aus dem Wasserweg herausgehoben werden kann, um bei Bedarf den Wasserweg völlig freizugeben (z.B. im Falle eines drohenden Hochwassers). Um den Modul sicher heben zu können sind in den ortsfesten Strukturen des Wasserweges Führungen vorgesehen in denen der Modul beim Heben geführt wird, womit die Position des Moduls in allen Hebepositionen festgelegt ist und insbesondere beim Absenken die vorgesehene Betriebsposition sicher erreicht wird. Ähnliche Anlagen sind auch in der EP 1 083 333 A2 bzw. US 4,755,690 beschrieben.
Bei Anlagen bei denen die Oberkante der ortsfesten Strukturen nur geringfügig oberhalb des maximalen Wasserspiegels liegen und damit die Länge der vorgesehenen Führungen in den ortsfesten Strukturen zu kurz sind, um eine ausreichende Führung des Moduls beim Herausheben des Moduls aus dem Wasserweg sicherzustellen, konnte deshalb bisher ein solcher Modul zur Erzeugung elektrischer Energie nicht eingesetzt werden.

Die vorliegende Erfindung hat sich daher die Aufgabe gestellt einen Modul auch bei Wasserwegen mit ortsfesten Strukturen deren Oberkanten nur geringfügig über dem maximalen Wasserspiegel liegen einfach einsetzbar zu machen.

Bestehende Wasserwege lassen sich sehr vorteilhaft in eine Anlage zur Erzeugung elektrischer Energie umbauen, indem eine bestehende Anlage mit zumindest zwei einen Teil des Wasserwegs bildenden ortsfesten Strukturen deren Oberkante sich nur geringfügig über dem maximalen Oberwasserspiegel befindet, ausgewählt wird, in den ortsfesten Strukturen Führungseinrichtungen vorgesehen werden, in denen der Modul oder die Module heb- und senkbar geführt wird, an zwei nebeneinander angeordneten ortsfesten Strukturen zumindest je eine Hilfseinrichtung angeordnet wird, die sich über die Oberkanten der ortsfesten Strukturen erstrecken und im Wesentlichen eine Verlängerung der Führungseinrichtungen der ortsfesten Struktur bilden, ein oder mehrere, vorzugsweise vorgefertigte, Module mit einer Anzahl von Turbinen-Generatoreinheiten, die zumindest abschnittsweise übereinander und/oder nebeneinander angeordnet und miteinander zu einem oder mehreren Modulen verbunden sind in die Hilfseinrichtungen eingesetzt werden, sodass der Modul, oder die Module, in den Hilfseinrichtungen zumindest teilweise heb- und senkbar geführt wird, um den Modul auch bei maximalern Oberwasserspiegel über die Oberkante der ortsfesten Strukturen hinaus geführt aus dem strömenden Medium herausheben zu können, so dass der Modul sich zur Gänze oberhalb der Oberkante der ortsfesten Strukturen befindet und gegebenenfalls eine Hebeeinrichtung zum Heben bzw. Senken des Moduls, oder der Module, am Wasserweg angeordnet wird. Mit diesem Verfahren können bestehende Wasserwege mit niedrigen ortsfesten Strukturen sehr einfach und schnell in Einrichtungen zur Erzeugung elektrischer Energie umgebaut werden. Damit erweitert sich der Einsatzbereich eines Moduls zur Erzeugung elektrischer Energie erheblich.

Vorteilhafterweise wird zumindest eine Turbinen-Generatoreinheit stromabwärts der Turbine mit einem Saugrohr verbunden und der zugehörige Modul mit dem Saugrohr gehoben bzw. gesenkt. Dadurch kann der Wasserweg zur Gänze freigegeben werden.

Wenn im Wasserweg stromabwärts der Turbine zumindest ein Saugrohr angeordnet wird, sodass dieses Saugrohr mit zumindest einer Turbinen-Generatoreinheit in deren Betriebsposition derart zusammenwirkt, dass ein im Wesentlichen durchgängiger Strömungskanal vom Oberwasser durch die Turbine und das Saugrohr zum Unterwasser entsteht, kann der Wirkungsgrad der Turbinen-Generatoreinheit und damit die elektrische "Ausbeute" in einfacher Weise verbessert werden.

Eine günstige Weiterbildung der Erfindung ist **dadurch gekennzeichnet, dass** das Saugrohr im Wasserweg verbleibt während der Modul gehoben wird. Dadurch werden kleinere Hebezeuge benötigt und die Gefahr eines Verkippens des Moduls beim vollständigen Herausheben minimiert.

Günstig hat es sich erwiesen, wenn die Hebeeinrichtung an den ortsfesten Strukturen befestigt wird.

Die Leckageverluste und damit die Energieverluste können im Wesentlichen unterbunden werden, wenn zumindest in der Betriebsposition eines Moduls der Zwischenraum zwischen Modul und der Bodenstruktur und/oder zwischen Modul und ortsfester Struktur im Wesentlichen flüssigkeitsdicht abgedichtet wird, da damit das gesamte Medium durch die Turbinen-Generatoreinheit fließen muss und zur Erzeugung elektrischer Energie verwendet werden kann.

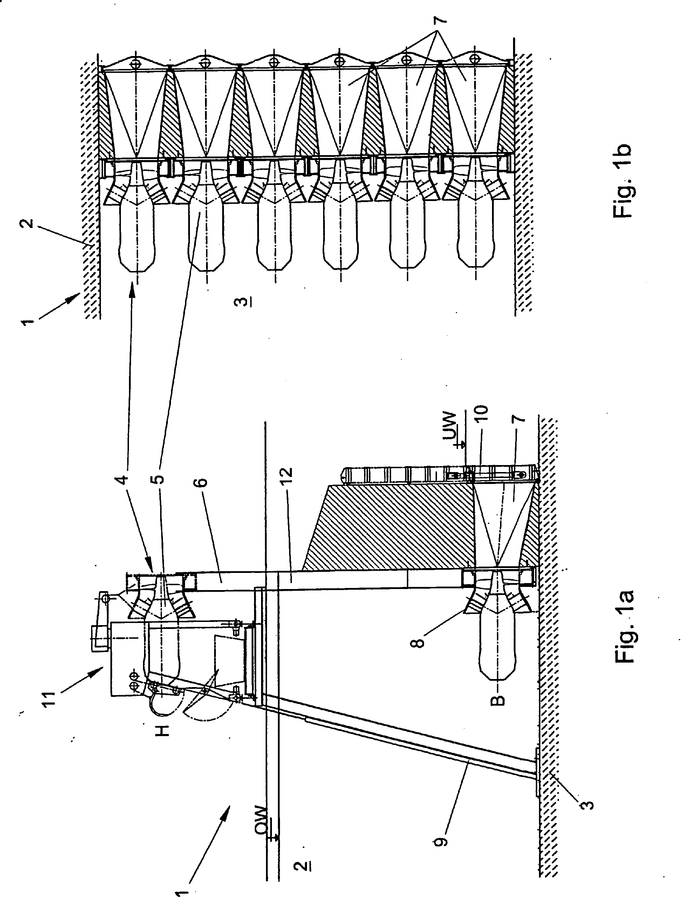

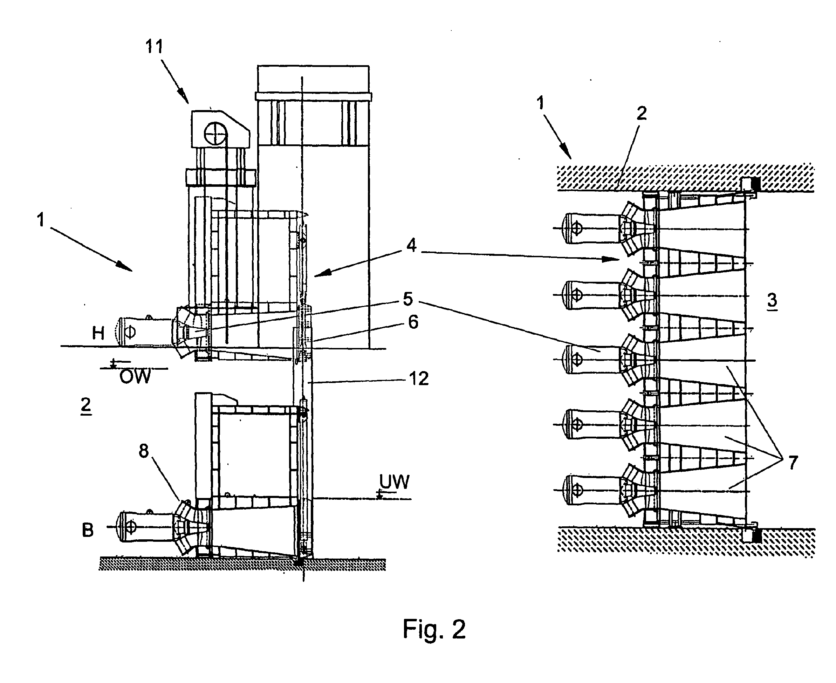

Die gegenständliche Erfindung wird anhand der beispielhaften, nicht einschränkenden, verschiedene Ausgestaltungen der Erfindung zeigenden Figuren 1 und 2 beschriebenen, wobei
Fig. 1 und 2 jeweils eine Drauf- und Seitensicht einer Anlage zur Realisierung des erfindungsgemäßen Verfahrens zeigen.

In Fig. 1 ist ein Wasserweg 1 angedeutet, der links und rechts durch je eine vorzugsweise bereits bestehende ortsfeste Struktur 2 begrenzt wird, wie in Fig. 1b deutlich ersichtlich ist. Weiters ist der Wasserweg unten durch eine ebenfalls bestehende ortsfeste Bodenstruktur 3 begrenzt, siehe Fig. 1a. Die beiden ortsfesten Strukturen 2 und die Bodenstruktur 3 bilden somit einen Kanal oder ein Gerinne, wie es z.B. bei einer aufgelassene Schiffschleuse oder einem künstlicher Kanal vorzufinden ist.
Ein solcher vorzugsweise bereits bestehender Wasserweg 1 wird nun dazu verwendet um elektrische Energie zu erzeugen, indem ein Modul 4, bestehend aus einer Anzahl von Turbinen-Generatoreinheiten 5, die nebeneinander angeordnet und miteinander zu einem Modul 4 verbunden sind, in den Wasserweg eingesetzt wird, wodurch zwangsweise stromaufwärts des Moduls ein Oberwasserspiegel OW und stromabwärts ein Unterwasserspiegel UW entsteht, die zur Energieerzeugung notwendig sind. Eine Turbinen-Generatoreinheit 5 besteht aus einem Generator, z.B. ein permanentmagneterregter Rohrgenerator, und einer Turbine, z.B. eine Kaplanturbine, die mit dem Generator verbunden ist. Grundsätzlich ist dabei auch jede andere denkbare Turbinen-Generatoreinheit 5, z.B. in Straflo Ausführung, möglich. An die Turbine einer Turbinen-Generatoreinheit 5 schließt stromabwärts ein Saugrohr 7 an, um den Wirkungsgrad der Turbine zu verbessern. Zusätzlich ist hier ein stromaufwärts der Turbine ein Einlaufrohr 8 vorgesehen, in dem in bekannter Weise Stütz- und Leitschaufeln angeordnet sein können. Eine Turbinen-Generatoreinheit 5 weist weiters eine Verschlusseinrichtung 10 auf, hier ein stromabwärts angeordneter Saugrohrverschluss in Form eines Schützes, um den Durchfluss durch eine Turbinen-Generatoreinheit 5 unterbinden zu können. Die Turbinen-Generatoreinheiten 5 werden vom Medium vom Oberwasser OW zum Unterwasser UW durchströmt, wodurch in bekannter Weise die Turbinen und in weitere Folge auch die Generatoren in Rotation versetzt werden und elektrischer Strom erzeugt wird.

In gewissen Situationen, z.B. bei einem Hochwasser oder zur Wartung, ist es jedoch notwendig, den Modul 4 aus dem Wasserweg herauszuheben, um entweder den Wasserweg 1 frei zu machen oder den Modul 4 zugänglich zu machen. Dazu ist eine Hebeeinrichtung 11 vorgesehen, die am Wasserweg 1, vorzugsweise auf den ortsfesten Strukturen 2, angeordnet ist und zum Heben mit dem Modul 4 verbunden werden kann.
Außerdem kann noch stromaufwärts des Moduls 4 wie hinlänglich bekannt ein Rechen 9 angeordnet sein, um zu verhindern, dass Schwemmgut durch die Turbinen-Generatoreinheiten 5 geschwemmt wird, was zu Beschädigungen der Turbinen-Generatoreinheiten 5 führen könnte. Weiters ist im Beispiel nach Fig. 1 auch eine ebenfalls bekannte Rechenreinigungseinrichtung angedeutet.

Um den Modul 4 sicher und kontrolliert heben zu können sind in den ortsfesten Strukturen Führungen 12 vorgesehen, in denen der Modul 4 über geeignete Führungsmittel, wie z.B. Führungsrollen oder ähnliches, geführt wird, wodurch die Lage in Strömungsrichtung festgelegt ist. Bei Wasserwegen 1 mit niedrigen Seitenwänden, also bei Anlagen bei denen sich die Oberkante der ortsfesten Struktur 2 nur geringfügig über dem maximalen Oberwasserspiegel OW befindet, wäre diese notwendige Führung nicht gewährleistet, da in diesen Fällen der Modul 4 über die Oberkante der ortsfesten Strukturen 2 hinausgehoben werden müsste, um den Wasserweg 1 gänzlich frei zu machen oder den Modul 4 zugänglich zu machen. Unter "geringfügig" ist in diesem Zusammenhang im Wesentlich der Umstand zu verstehen, dass die Differenz zwischen maximalen Oberwasserspiegel OW und der Oberkante der ortsfesten Struktur 2 nicht ausreicht, um den Modul 4 sicher in den Führungen 12 geführt aus dem Wasserweg heben zu können.
Dazu ist nun eine als Hilfsvorrichtung eine Hilfsführung 6 vorgesehen, die sich über die Oberkante der ortsfesten Struktur 2 erstreckt und im Wesentlichen eine Verlängerung der Führung 12 der ortsfesten Struktur 2 bildet. Damit kann nun der Modul 4 unter Beibehaltung der notwendigen Führung auch über die Oberkante der ortsfesten Struktur 2 in eine Hebeposition H gehoben werden.

Beim Beispiel nach Fig. 1 sind die Saugrohre 7 nicht Teil des Moduls 4, sondern sind separat im Wasserweg 1 angeordnet. In der Betriebsposition B des Moduls 4 fügen sich die Turbinen-Generatoreinheiten 5 und das jeweils zugehörige Saugrohr 7 zu einem durchgehenden Strömungskanal zusammen. Da das Saugrohr 7 im Wasserweg 1 verbleibt, muss natürlich weniger Gewicht gehoben werden, wodurch die Hebeeinrichtung 11 natürlich auch geringer dimensioniert werden kann.

Fig. 2 zeigt ein Ausführungsbeispiel, bei dem der Modul 4 mit den Saugrohren 7 eine Einheit bildet und als Ganzes gehoben wird. Da der Modul 4 dadurch natürlich wesentlich länger wird, sind hier an jeder Seite der ortsfesten Struktur 2 zwei Führungen 12 vorgesehen, wodurch ein Verkippen des Moduls 4 beim Heben unterdrückt wird. Weiters ist wieder eine Hilfsführung 6 vorgesehen, die es wieder ermöglicht, den Modul 4 geführt über die Oberkante der ortsfesten Struktur 2 hinaus zu heben. Ansonsten gilt natürlich das bereits bei Fig. 1 gesagte analog auch für das Beispiel nach Fig. 2.

Die Hebeeinrichtung 11 kann dabei eine bereits vorhandene Hebeeinrichtung 11 sein, die gegebenenfalls an die neue Aufgabe angepasst werden kann, oder es kann auch eine neu montierte Hebeeinrichtung 11 sein.

Um Leckageverluste und damit Energieverluste zu vermeiden kann der Modul 4 gegenüber den umgebenden ortsfesten Strukturen 2 und der Bodenstruktur 3 mit entsprechenden hinlänglich bekannten Dichtungseinrichtungen abgedichtet werden. Damit wird sichergestellt, dass das gesamte verfügbare Medium durch die Turbinen-Generatoreinheit 5 strömt und zur Erzeugung elektrischer Energie verwendet wird.

Der Modul 4 ist vorzugsweise derart ausgeführt, dass jede Turbinen-Generatoreinheit 5 einzeln ausgetauscht werden kann. Ein solcher Austausch kann dabei auch vor Ort durchgeführt werden, wodurch nach Einsetzen des Moduls 4 in den Wasserweg 1 praktisch alle erforderlichen Wartungsarbeiten vor Ort durchgeführt werden können.

Es könnte stromaufwärts des Moduls 4 natürlich auch eine Verschlusseinrichtung vorgesehen werden, mit der der Wasserweg bei Bedarf gegenüber dem strömenden Medium komplett abgeschlossen werden kann. Eine aufgelassene Schleuse hat z.B. bereits eine solche Einrichtung mit den Schleusentoren, die entsprechend verwendet werden könnte.

Mit dieser "Verlängerung" der Führung des Moduls 4 sind somit auch bestehende Wasserwege zugänglich, bei denen bisher solche Module 4 nicht eingesetzt werden konnten, da der Modul 4 nicht genügend weit aus dem Wasserweg 1 gehoben werden konnten. Dies kann nun genutzt werden, um solche Wasserwege in Einrichtungen zur Erzeugung elektrischer Energie umzubauen.
Dazu werden, falls nicht bereits vorhanden, Führungen 12 in den bereits bestehenden ortsfesten Strukturen 2 befestigt, bzw. werden die ortsfesten Strukturen 2 entsprechend umgebaut. Weiters werden die Hilfsführungen 6 montiert, die ein sicheres Heben über den gesamten Hebebereich sicherstellen. Danach kann der vorzugsweise vorgefertigte Modul 4 in die Führungen 6, 12 eingesetzt werden und in die Betriebsposition B abgesenkt werden, wozu eine Hebeeinrichtung 11, die bereits vorhanden sein kann oder nachträglich montiert wird, verwendet werden kann. Gegebenenfalls kann der Modul 4 noch gegenüber den umgebenden ortsfesten Strukturen 2 und der Bodenstruktur 3 mit entsprechenden hinlänglich bekannten Dichtungseinrichtungen abgedichtet werden.

## Patentansprüche

1. Verfahren zum Umbau einer in einem Wasserweg (1) angeordneten Anlage zur Erzeugung elektrischer Energie aus einem strömenden Medium, z.B. Wasser, **dadurch gekennzeichnet, dass**
a) eine bestehende Anlage mit zumindest zwei einen Teil des Wasserwegs (1) bildenden ortsfesten Strukturen (2) deren Oberkante sich nur geringfügig über dem maximalen Oberwasserspiegel (OW) befindet, ausgewählt wird;
b) in den ortsfesten Strukturen (2) Führungseinrichtungen (12) vorgesehen werden, in denen der Modul (4), oder die Module (4), heb- und senkbar geführt wird,
c) an zwei nebeneinander angeordneten ortsfesten Strukturen (2) zumindest je eine Hilfseinrichtung (6) angeordnet wird, die sich über die Oberkanten der ortsfesten Strukturen (2) erstrecken und im Wesentlichen eine Verlängerung der Führungseinrichtungen (12) der ortsfesten Struktur (2) bilden,
d) ein oder mehrere, vorzugsweise vorgefertigte, Module (4) mit einer Anzahl von Turbinen-Generatoreinheiten (5), die zumindest abschnittsweise übereinander und/oder nebeneinander angeordnet und miteinander zu einem oder mehreren Modulen (4) verbunden sind in die Hilfseinrichtungen (6) eingesetzt werden, sodass der Modul (4), oder die Module (4), in den Hilfseinrichtungen (6) zumindest teilweise heb- und senkbar geführt wird, um den Modul (4) auch bei maximalern Oberwasserspiegel (OW) über die Oberkante der ortsfesten Strukturen (2) hinaus geführt aus dem strömenden Medium herausheben zu können, so dass der Modul (4) sich zur Gänze oberhalb der Oberkante der ortsfesten Strukturen (2) befindet und
e) gegebenenfalls eine Hebeeinrichtung (11) zum Heben bzw. Senken des Moduls (4), oder der Module (4), am Wasserweg (1) angeordnet wird.

2. Verfahren nach Anspruch 1, **dadurch gekennzeichnet, dass** zumindest eine Turbinen-Generatoreinheit (5) stromabwärts der Turbine mit einem Saugrohr (7) verbunden wird und der zugehörige Modul (4) mit dem Saugrohr (7) gehoben bzw. gesenkt wird.

3. Verfahren nach Anspruch 1 oder 2, **dadurch gekennzeichnet, dass** im Wasserweg (1) stromabwärts der Turbine zumindest ein Saugrohr (7) angeordnet wird, sodass dieses Saugrohr (7) mit zumindest einer Turbinen-Generatoreinheit (5) in deren Betriebsposition (B) derart zusammenwirkt, dass ein im Wesentlichen durchgängiger Strömungskanal vom Oberwasser (OW) durch die Turbine und das Saugrohr (7) zum Unterwasser (UW) entsteht.

4. Verfahren nach Anspruch 3, **dadurch gekennzeichnet, dass** das Saugrohr (7) im Wasserweg (1) verbleibt während der Modul (4), oder die Module (4), gehoben wird.

5. Verfahren nach einem der Ansprüche 1 bis 4, **dadurch gekennzeichnet, dass** die Hebeeinrichtung (11) an den ortsfesten Strukturen (2) befestigt wird.

6. Verfahren nach einem der Ansprüche 1 bis 5, **dadurch gekennzeichnet, dass** zumindest in der Betriebsposition (B) eines Moduls (4) der Zwischenraum zwischen Modul (4) und der Bodenstruktur (3) und/oder zwischen Modul (4) und ortsfester Struktur (2) im Wesentlichen flüssigkeitsdicht abgedichtet wird.

## Claims

1. Process for modification of a plant arranged in a water path (1) and used for producing electric energy from a flowing medium, e.g. water, **characterized by**
a) an existing plant with at least two fixed structures (2), whose upper edge is located only slightly above the maximum head water level (HW), forming a part of the water path (1) being selected;
b) guiding devices (12) being provided in the fixed structures (2), in which the module (4), or the modules (4), is/are guided so that they can be lifted and lowered;
c) at least one auxiliary device (6), which extends beyond the upper edges of the fixed structures (2) and essentially forms a prolongation of the guiding devices (12) of the fixed structure (2), being arranged at each of two adjacent fixed structures (2);
d) one or several, preferably prefabricated modules (4) with a number of turbine generator units (5), which are arranged above each other and/or adjacent to each other at least in sections, and are interconnected to form one or several modules (4), being inserted in the auxiliary devices (6) such that the module (4), or the modules (4), is/are guided in the auxiliary devices (6) so that they can be at least partly lifted or lowered in order that the module (4) can be raised from the flowing medium to above the upper edge of the fixed structures (2) also at maximum head water level {HW), so that the module (4) is entirely above the upper edge of the fixed structures (2); and
e) a lifting device (11) being possibly arranged at the water path (1) for lifting or lowering the module (4), or the modules (4).

2. Process according to Claim 1, **characterized by** at least one turbine generator unit (5) being connected to a draft tube (7) downstream of the turbine and by the corresponding module (4) being lifted or lowered with the draft tube (7).

3. Process according to Claim 1 or 2, **characterized by** at least one draft tube (7) being arranged in the water path (1) downstream of the turbine such that this draft tube (7) acts together with at least one turbine generator unit (5) in the latter's operating position (B) in a manner to create an essentially through-going flow channel from the head water (HW) through the turbine and the draft tube (7) to the tailwater (TW).

4. Process according to Claim 3, **characterized by** the draft tube (7) remaining in the water path (1) while the module (4), or the modules (4), is/are lifted.

5. Process according to one of the Claims 1 to 4, **characterized by** the lifting device (11) being fastened to the fixed structures (2).

6. Process according to one of the Claims 1 to 5, **characterized by** the spacing between the module (4) and the bottom structure (3) and/or between the module (4) and the fixed structure (2) being sealed essentially liquid-tight in the operating position (B) of a module (4)

## Revendications

1. Procédé de modification d'une installation de production d'énergie électrique à partir d'un milieu courant, par exemple, de l'eau, disposée dans une trajectoire d'eau (1), **caractérisé en ce que :**
a) une installation existante avec, au moins, deux structures fixes (2), dont l'arête supérieure est placée seulement légèrement au-dessus du niveau maximum de l'eau d'amont (EA) formant une partie de la trajectoire d'eau (1), est sélectionnée,
b) des dispositifs de guidage (12) sont prévus dans les structures fixes (2), dans lesquels le module (4), ou les modules (4), se trouve(nt) guidé(s) de façon à pouvoir être relevé(s) ou abaissé(s) ;
c) au moins un dispositif auxiliaire (6), qui s'étend au-delà des arêtes supérieures des structures fixes (2) et forme, dans l'essentiel, une prolongation des dispositifs de guidage (12) des structures fixes (2), est disposé sur chacun de deux structures fixes adjacents (2) adjacents;
d) un ou plusieurs modules (4), de préférence préfabriqués, avec une quantité d'unités turbines-générateurs (5), qui sont disposées l'une au-dessus de l'autre et/ou adjacentes l'une à l'autre au moins par passages, et sont interconnectées pour obtenir un ou plusieurs modules (4), sont insérés aux dispositifs auxiliaires (6) de telle façon que le module (4), ou les modules (4), est/sont guidé(s) dans les dispositifs auxiliaires (6) pouvant être relevé(s) au abaissé(s) au moins en partie, pour que le module (4) puisse être relevé au-dessus de l'arête supérieure des structures fixes (2) aussi en cas de niveau maximum de l'eau d'amont (EA) du milieu courant, pour que le module (4) soit entièrement au-dessus de l'arête supérieure des structures fixes (2), et
e) un dispositif de levage (11) est, le cas échéant, disposé à la trajectoire d'eau (1), pour lever ou abaisser le module (4), ou les modules (4).

2. Procédé selon la revendication 1, **caractérisé en ce qu'**au moins une unité turbine-générateur (5) est connectée à un aspirateur (7) en aval de la turbine et **en ce que** le module (4) correspondent est relevé ou abaissé avec l'aspirateur (7).

3. Procédé selon la revendication 1 ou 2, **caractérisé en ce qu'**au moins un aspirateur (7) est dispose dans la trajectoire d'eau (1) en aval de la turbine de manière que cet aspirateur (7) agisse ensemble avec au moins une unité turbine-générateur (5) dans la position de service (B) de cette dernière, de manière à créer un canal d'écoulement essentiellement continu allant de l'eau d'amont (EA) à travers la turbine et l'aspirateur (7) à l'eau de fuite (EF).

4. Procédé selon la revendication 3, **caractérisé en ce que** l'aspirateur (7) reste dans la trajectoire d'eau (1) pendant le levage du module (4), ou des modules (4).

5. Procédé selon l'une des revendications 1 à 4, **caractérisé en ce que** le dispositif de levage 11) est attaché aux structures fixes (2).

6. Procédé selon l'une des revendications 1 à 5, **caractérisé en ce que** l'écart entre le module (4) et la structure de base (3) et/ou entre le module (4) et la structure fixe (2) est essentiellement étanche aux liquides dans la position de service (B) d'un module (4).
